(19) Europäisches Patentamt / European Patent Office / Office européen des brevets

(11) **EP 3 472 015 B1**

(12) **FASCICULE DE BREVET EUROPEEN**

(45) Date de publication et mention de la délivrance du brevet:
**10.06.2020 Bulletin 2020/24**

(21) Numéro de dépôt: **17736992.3**

(22) Date de dépôt: **16.06.2017**

(51) Int Cl.:
**B60W 40/09** (2012.01)   **B60W 50/00** (2006.01)

(86) Numéro de dépôt international:
**PCT/FR2017/051567**

(87) Numéro de publication internationale:
**WO 2017/216495 (21.12.2017 Gazette 2017/51)**

(54) **PROCÉDÉ DE DÉTERMINATION D'UNE CLASSE DE CONDUITE DE RÉFÉRENCE**

VERFAHREN ZUR BESTIMMUNG EINER REFERENZFAHRKLASSE

METHOD FOR DETERMINING A REFERENCE DRIVING CLASS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2016 FR 1655598**

(43) Date de publication de la demande:
**24.04.2019 Bulletin 2019/17**

(73) Titulaire: **Compagnie Générale des Etablissements Michelin**
**63000 Clermont-Ferrand (FR)**

(72) Inventeurs:
• **GANDAR, Benoît**
**63040 Clermont-Ferrand Cedex 9 (FR)**
• **DUVERNIER, Marc**
**63040 Clermont-Ferrand Cedex 9 (FR)**
• **PETIT, Clément**
**63040 Clermont-Ferrand Cedex 9 (FR)**
• **STRAHM, Christian**
**63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
EP-A1- 2 733 037     EP-A1- 2 778 007
WO-A1-03/048613     DE-A1- 19 843 395
DE-A1-102014 215 258     US-A1- 2013 164 712

# Description

## DOMAINE DE L'INVENTION

La présente invention se situe dans le domaine des véhicules automobiles, et plus précisément dans le domaine des systèmes d'assistante à la conduite de tels véhicules.

Les véhicules automobiles sont aujourd'hui équipés de nombreux équipements permettant d'améliorer la sécurité du conducteur et des passagers d'un véhicule. On connait ainsi les systèmes d'assistance de freinage (ABS) permettant d'éviter le blocage des roues en cas de freinage intense. On connaît aussi les correcteurs électroniques de trajectoire (ESP), qui permettent, par un contrôle de la trajectoire, d'éviter les dérapages des véhicules. DE 198 43 395 décrit un procédé de détermination d'une classe de conduite de référence d'un conducteur en fonction de la vitesse et de la position du véhicule.

Le développement de ces systèmes a été rendu possible par l'installation de nombreux dispositifs électroniques dans les véhicules, et la mise en œuvre de calculateurs électroniques de plus en plus puissants, permettant d'embarquer des puissances de calcul importantes dans des véhicules automobiles sans encombrement additionnel.

On voit également apparaître de nombreux systèmes d'assistance à la conduite, tels que des limiteurs de vitesse, régulateurs de vitesse, aide à la conduite en courbe. Dans une étape encore plus avancée vers les véhicules autonomes, on prévoit également des systèmes qui permettent de déterminer des vitesses de roulage préconisées sur un trajet complet, ou une portion de trajet. Ces vitesses de roulage peuvent être indiquées directement au conducteur, ou fournies à un actionneur du véhicule.

Afin de préconiser les vitesses de manière la plus pertinente possible, il apparaît utile de connaître la catégorie de conduite du conducteur du véhicule. Ces préconisations de vitesse peuvent ensuite être transmises au véhicule pour être utilisées par des systèmes d'aide à la conduite, ou affichées dans le véhicule, ou bien encore être utilisées comme vitesse de référence pour détecter des comportements inhabituels ou dangereux et ainsi générer des alarmes permettant de renforcer la sécurité de conduite.

Or, si on sait aujourd'hui choisir une vitesse préconisée en fonction d'une préférence conducteur, on ne connaît pas de procédé ou de système permettant d'identifier la classe de conduite d'un conducteur en temps réel dans le véhicule, et de manière transparente pour le conducteur, c'est-à-dire sans modifier ses conditions de roulage. La présente invention vise à remédier à ce manque.

## BREVE DESCRIPTION DE L'INVENTION

Ainsi, l'invention concerne un procédé de détermination d'une classe de conduite de référence d'un conducteur parmi un ensemble de classes de conduite prédéterminées, chaque classe de conduite prédéterminée étant caractérisée par un profil de vitesse, le procédé comprenant les étapes suivantes :

- On détermine la vitesse d'un conducteur sur un trajet donné,

- On compare la vitesse observée aux profils de vitesse de chacune des classes de conduite prédéterminées pour obtenir un écart entre le conducteur et chacune des classes de conduite,

- On détermine une classe de conduite détectée comme étant celle qui minimise cet écart, et

- On détermine la classe de conduite de référence en fonction de cette classe de conduite détectée.

Un procédé selon l'invention est avantageusement destiné à être mis en œuvre dans un véhicule automobile.

## 1 - Classes de conduite prédéterminées

Pour déterminer des catégories de conduite, on a, au préalable, observé la vitesse et/ou l'accélération d'un certain nombre d'individus sur un trajet prédéterminé, et on effectue une classification hiérarchique sur l'ensemble des observations disponibles. On précise ici que les variables sont enregistrées avec une fréquence propre aux moyens d'enregistrement. Ces variables ne sont pas statistiquement considérées comme des courbes continues, mais comme un ensemble d'observations ponctuelles. Ainsi, à chaque individu est associé un ensemble d'observations pour chacun de ses passages.

Le principe de cette classification est, en utilisant une notion de distance adéquate, de regrouper les utilisateurs dans des classes, chacune le plus homogène possible et, entre elles, les plus distinctes possible. Dans un exemple de réalisation, les classes sont telles que la variance intra-classes est minimisée, alors que la variance intergroupes est maximisée.

De manière avantageuse, pour effectuer la classification, on enregistre la vitesse et/ou l'accélération d'un individu au cours de plusieurs passages sur un même parcours, chaque passage donnant lieu à un ensemble d'observations. Pour définir la distance entre deux utilisateurs, on calcule la distance entre les vitesses et/ou accélérations de référence de chacun de ces utilisateurs.

Dans une telle classification hiérarchique, le nombre de classes utilisées est choisi à posteriori, et est considéré comme adéquat si la variance interclasse ne diminue pas significativement en ajoutant une classe.

Ainsi, dans un exemple de réalisation de la présente invention, on a envisagé d'utiliser six classes, pour minimiser la variance interclasse. Or, on a constaté qu'on obtenait des résultats aussi pertinents avec quatre classes. On choisit donc préférentiellement ce nombre de quatre classes, qui permet d'obtenir un bon compromis entre la parcimonie des calculs et une représentativité correcte des différents modes de conduite. Cela permet en effet de réduire la puissance de calcul et les temps de calcul nécessaires sans dégrader la qualité des résultats.

Une fois que les classes sont déterminées, il est possible de déterminer la vitesse moyenne de chaque classe, également appelée vitesse de profil. Concrètement, à chaque classe de conduite sera associé un profil comprenant à un tableau de points géopositionnés, et une vitesse associée à chaque point.

## 2 - Séquence d'identification d'une classe de conduite

Partant de ces classes de conduites prédéterminées, un procédé selon l'invention permet alors d'en détecter une comme étant la plus proche du comportement de conduite du conducteur au volant du véhicule.

A cet effet, un procédé selon l'invention fait appel, dans un mode de réalisation, à une séquence d'identification, comprenant un certain nombre d'étapes qui seront détaillées ci-après. La séquence d'identification comprend les étapes suivantes :

- Une étape d'initialisation effectuée une seule fois, au lancement de la séquence d'identification.

- A chaque instant, une étape d'observation de vitesse et de calcul d'au moins un indicateur de distance à chacune des classes, permettant de comparer la vitesse observée à chacune des classes conduite, ce calcul correspondant à l'étape de comparaison précédemment mentionnée, et

- Une étape de terminaison de l'identification.

La séquence d'identification peut être déclenchée, selon les modes de réalisation de l'invention, dans un ou plusieurs des cas suivants :

- Le conducteur du véhicule déclenche manuellement une séquence d'identification,

- La séquence d'identification est lancée automatique au démarrage du véhicule,

- La séquence d'identification est régulièrement relancée, pendant les phases de roulage, pour vérifier que la classe de conduite de référence est toujours la plus pertinente.

- Après une séquence initiale, le processus d'identification continue de manière permanente en comparant la vitesse observée à chacune des classes de conduite sur une fenêtre temporelle et/ou spatiale glissante.

Ainsi, l'étape de comparaison est effectuée au fur et à mesure de l'étape de détermination, ou d'observation, de vitesse. Cette comparaison en temps réel permet d'assurer, même en cas d'interruption prématurée de la séquence d'identification, par exemple par le conducteur du véhicule, la présence d'une information exploitable pour déterminer une classe de conduite.

L'étape d'observation, et/ou de détermination de vitesse met en œuvre un ou plusieurs moyens parmi : la lecture de données sur le bus CAN du véhicule, l'utilisation de la vitesse GPS, l'utilisation d'un dispositif de type compteur de tours de roue.

Pour pouvoir effectuer la comparaison de vitesse, il est utile de connaître le positionnement du véhicule. En effet, la comparaison consiste à comparer la vitesse du véhicule en un point géolocalisé avec la valeur des différents profils de vitesse prédéterminés au même point.

Ainsi, dans un mode de réalisation avantageux, le véhicule connaît la destination et les routes empruntées, par exemple parce que le conducteur a programmé son trajet via un navigateur installé dans le véhicule.

Dans le cas où le trajet n'est pas programmé, un procédé selon l'invention comprend préférentiellement une étape initiale consistant à accrocher le véhicule à une route réelle. Cette étape, appelée « map matching » ou recalage cartographique, consiste à comparer régulièrement des positions GPS du véhicule avec des données cartographiques, afin de déterminer la route empruntée.

Après avoir franchi un premier seuil de distance, l'étape de terminaison, correspondant à la fin de l'étape de comparaison, consiste à vérifier si un critère de fin d'identification est rempli, parmi les critères suivants : la distance parcourue est supérieure à un deuxième seuil de distance prédéterminé, par exemple 600 mètres, l'indicateur montre un écart suffisamment important entre la classe détectée et les autres classes, le trajet parcouru comprend un événement de trajet significatif.

Le premier seuil de distance vise à éviter les artéfacts dus à une détection trop courte. En effet, on constate que sur les premiers mètres de trajet, un conducteur est rarement à sa vitesse naturelle, et on risque donc une fausse détection.

Le deuxième seuil de distance est avantageusement choisi de manière à garantir une plage d'identification suffisamment longue, tout en limitant autant que possible le nombre de données à traiter et le temps nécessaire pour réaliser l'identification.

Concernant l'indicateur de distance à la classe de conduite, il est par exemple déterminé sous forme d'un écart quadratique entre la vitesse du conducteur et chacune des classes. Ainsi, lorsque l'écart quadratique entre la vitesse observée et une classe est significativement plus faible que l'écart quadratique aux autres classes, par exemple 100 fois plus petit, il est possible d'arrêter la séquence d'identification.

Dans un autre exemple encore, la séquence d'identification s'achève dès qu'un événement de trajet significatif est rencontré, par exemple une variation de vitesse pour prendre un enchainement de virages ou le passage à vitesse stable d'une grande courbe. Dans un autre exemple encore, la séquence d'identification peut être interrompue manuellement par le conducteur du véhicule.

A la fin de la séquence d'identification, ou de comparaison, il est alors possible d'identifier la classe de conduite pour laquelle l'écart entre le conducteur et la classe de conduite est le plus faible.

La classe de conduite identifiée à l'issue de cette séquence est appelée « classe de conduite détectée » dans la présente description. Dans le cas d'une identification en continu sur fenêtre glissante, cette classe de conduite détectée devient disponible à l'issue de la séquence initiale, elle est ensuite actualisée en permanence. On verra plus loin les avantages de pouvoir disposer d'une classe de conduite détectée en permanence.

Dans un mode de réalisation préférentiel, cet écart est calculé sous forme d'un écart quadratique entre la vitesse observée et les points formant le profil de vitesse. Ce mode de réalisation sera ultérieurement détaillé.

### 3 - Détermination d'une classe de référence

A l'issue d'une séquence d'identification, une classe de conduite est donc détectée, par un procédé selon l'invention, comme étant la plus proche du conducteur. Partant de cette classe identifiée, il est alors possible de déterminer une classe de référence du conducteur.

Ainsi, dans un mode de réalisation préférentiel, la classe de référence est déterminée automatiquement comme étant égale à la classe détectée. Dans le cas d'une identification en continu sur une fenêtre glissante, qui peut résulter en une variation de la classe détectée, on peut décider de laisser inchangée la classe de référence, ou de ne modifier la classe de référence que lorsque la classe détectée est à nouveau stable sur une durée suffisante.

Dans un autre mode de réalisation, la classe de référence est déterminée comme étant égale à la classe détectée suite à validation de la part du conducteur. Dans ce cas, le procédé comprend les étapes suivantes :

- une étape de transmission au conducteur du véhicule de la classe détectée, et

- une étape de réception d'une information de validation de la part du conducteur.

Dans un autre mode de réalisation préférentiel, un conducteur du véhicule peut, à tout instant, choisir explicitement une classe de conduite, par exemple par le biais d'une interface graphique installée dans le véhicule. Ce choix peut être effectué préalablement à la mise en œuvre d'un procédé selon l'invention, et dans ce cas la classe choisie peut être utilisée comme classe de référence initiale. Il peut également être effectué en cours de roulage, indépendamment de toute séquence d'identification. Dans ce cas, un procédé selon l'invention comprend une étape de recevoir, de la part du conducteur, une information concernant une classe choisie, et de déterminer la classe de référence comme étant égale à cette classe choisie.

### 4 - Procédé de surveillance

L'invention concerne également un procédé de surveillance de conduite, comprenant les étapes suivantes :

- Une étape de détermination de classe de référence, selon un procédé tel que précédemment décrit,

- Une étape de détermination d'un indicateur de distance du conducteur à la classe de référence, et

- Une étape d'émission une alerte lorsque l'indicateur remplit un critère d'alerte prédéterminé, l'écart devient supérieur à un seuil prédéterminé.

Dans un mode de réalisation préférentiel, où l'indicateur de distance à la classe est exprimé sous forme d'écart entre une vitesse instantanée et la vitesse de référence, un critère d'alerte peut être : la distance à la classe de référence devient supérieure à un seuil prédéterminé, ou la vitesse instantanée du véhicule devient supérieure à la vitesse de profil de la classe de conduite la plus dynamique, parmi les classes de conduite prédéterminées.

Dans un autre exemple de réalisation, le critère d'alerte peut être un comportement erratique de la vitesse observée par rapport à la vitesse de référence,

En effet, lorsque le comportement du conducteur s'éloigne du profil correspondant à la classe de conduite de référence qui lui a été attribuée, cela peut indiquer une dérive d'attention, par exemple un endormissement, ou au contraire une conduite dangereuse. Dans ce cas, il est utile d'alerter le conducteur, par exemple par le biais d'un signal compris dans le groupe comprenant : un indicateur sonore, un indicateur visuel de type voyant sur le tableau de bord du véhicule, un indicateur vibratoire, par exemple au niveau du siège ou du volant du véhicule.

Dans le cas où la séquence d'identification est effectuée en continu, un comportement du conducteur qui s'éloigne du profil correspondant à une classe aura pour conséquence un changement de classe détectée et donc, dans le cas d'une validation automatique de la classe, un changement de classe de référence. Dans ce cas, la détermination d'une distance à la classe de référence n'est plus un élément représentatif pour détecter un comportement déviant du conducteur, puisque la classe s'adapte en temps réel.

Il apparaît alors utile de prévoir un autre dispositif pour maintenir un dispositif d'alerte. Dans ce cas, l'invention concerne un procédé de surveillance de conduite comprenant les étapes suivantes :

- Une étape de détermination, en continu, d'une classe de conduite détectée, selon un procédé conforme à l'invention,

- Une étape d'enregistrement, dans une mémoire d'un calculateur mettant en œuvre l'invention, des changements de classes détectées effectuées lors des séquences d'identification, et

- Une étape d'émission d'une alerte lorsque le nombre de changements de classe sur une période donnée devient supérieur à un certain seuil.

DESCRIPTION DETAILLEE DE L'INVENTION

**Mode de réalisation détaillé d'une séquence d'identification mise en œuvre dans un véhicule comprenant une interface graphique**

Dans un exemple de réalisation, non limitatif, le déroulement de la séquence est le suivant :

Phase d'initialisation :

- on met à zéro les sommes des écarts quadratiques pour les n classes. Le calcul d'écart quadratique sera ultérieurement détaillé,

- on met à zéro les moyennes d'écart aux n classes.

- on initialisation des indicateurs de fin d'identification qui le nécessitent (par exemple pour l'indicateur correspondant à une distance parcourue, il est utile de remettre le compteur à zéro à chaque nouvelle séquence p. ex distance parcourue = 0).

- on transmet au conducteur du véhicule, via l'interface graphique, l'information selon laquelle une identification est en cours.

Phase d'identification :
A chaque instant, en particulier à chaque cycle du calculateur, soit toutes les 10ms :

- on vérifie la non atteinte des conditions de fin d'identification.

- on interpole la vitesse des n représentants de classe en fonction du géopositionnement du véhicule,

- on met à jour les sommes des écarts quadratiques pour les n classes.

- on met à jour les moyennes d'écart aux n classes.

- on met à jour les indicateurs de fin d'identification.

- on identifie, par la somme d'écart la plus petite, la classe de conduite.

- on transmet au conducteur du véhicule, via l'interface graphique, l'information selon laquelle une identification est en cours.

- on transmet au conducteur du véhicule, via l'interface graphique, la classe détectée et l'écart moyen à la classe.

Phase de terminaison : à la fin de la détection

- on fige les valeurs sans remise à zéro (arrêt des calculs)
- on transmet au conducteur du véhicule, via l'interface graphique, l'information selon laquelle une identification est terminée.
- on transmet au conducteur du véhicule, via l'interface graphique, la classe détectée et l'écart moyen à la classe

**Détermination de l'écart entre un conducteur et une classe : mode de réalisation détaillé**

Ainsi que précédemment mentionné, un procédé selon l'invention comprend une étape de comparaison, au cours de laquelle on détermine un écart entre la vitesse du conducteur et des profils de vitesse associés à différentes classes de conduite prédéterminées. Pour déterminer cet écart, plusieurs indicateurs statistiques peuvent être utilisés.

Dans un mode de réalisation avantageux, on utilisera un calcul d'écart quadratique. Cet indicateur présente le double avantage de faire apparaître une divergence forte, et en outre d'avoir un comportement non signé.

Pour n classes de conduite, on dispose donc de n profils de vitesse, trié dans l'ordre croissant de dynamique et géopositionnés, sous forme d'une table : latitude, longitude, V1, ..., Vn. Pour chaque classe n, on calcule une image de l'écart quadratique :

$$E_n = \sum_{i=1}^{j} (Vvhc_i - Vn_i)^2$$

Vvhc représentant la vitesse mesurée du véhicule, et Vn la vitesse du profil de classe n à la même position

Dans un mode de réalisation préférentiel, on calcule également un indicateur d'écart à la classe, notamment dans le cas d'un procédé d'alerte tel que précédemment décrit :

$$\overline{\varepsilon_n} = \frac{1}{j} \sum_{i=1}^{j} (Vvhc_i - Vn_i)$$

Cette grandeur représente l'écart moyen par rapport au profil de classe, sur la fenêtre d'identification. Cette expression de l'écart, n'est pas judicieuse pour identifier valablement la classe. En effet, la sommation d'écarts signés pourrait aboutir à un indicateur d'écart faible alors que le conducteur peut être loin de la classe, alternativement en positif et en négatif. Par contre, une fois que la classe est déterminée sur la base d'autres indicateurs, celui-ci est très parlant pour le conducteur car exprimé directement en km/h

Dans un mode de réalisation, pour effectuer ces calculs, on associe un échantillon à chaque pas temporel. Ainsi, la somme des écarts quadratiques contient plus d'échantillons pour une même distance parcourue à faible vitesse qu'à vitesse élevée, ce qui a pour conséquence une surreprésentation des faibles vitesses, ce qui peut fausser l'identification.

Par conséquent, dans un autre mode de réalisation, les calculs précédemment décrits sont déclenchés non pas à intervalle temporels réguliers, mais à intervalle spatial régulier, par exemple tous les 50cm. Ceci permet de supprimer la surreprésentation des écarts quadratiques pour les faibles vitesses véhicule dans la somme finale.

Dans un autre mode de réalisation encore, afin d'obtenir un calcul le plus représentatif possible, on peut également attribuer un poids différent aux échantillons en fonction de leur représentativité. Ainsi, le comportement en ligne droite à vitesse stabilisée est plus en rapport avec une limitation légale de la vitesse avec peu de différenciation entre les différentes classes de conduite. En revanche, la différence entre classes est plus marquée dans les zones transitoires où la vitesse évolue et on peut donner plus de poids aux échantillons correspondant à de telles zones.

Une fois les calculs effectués, il est alors possible d'identifier une classe de conduite. Toutefois, comme précédemment indiqué, on peut envisager plusieurs modes de réalisation pour la fréquence des séquences d'identification. En effet, l'identification peut être réalisée une seule fois, ou au contraire être réitérée en continu pour garantir une mise à jour de la classe de conduite détectée si cela s'avère nécessaire.

On va donc décrire ci-après un mode de réalisation particulier dans lequel on effectue une identification en continu.

## Exemple de réalisation : Identification en continu sur fenêtre glissante

Par « identification en continu », on entend une identification sur une fenêtre glissante temporelle et/ou spatiale qui prend en compte uniquement l'historique récent au vu du critère de fin d'identification choisi. Par exemple, si le critère de fin d'identification est le fait que la distance parcourue soit supérieure à 600 mètres, on ne traitera l'identification de classe que sur la fenêtre glissante des 600 derniers mètres.

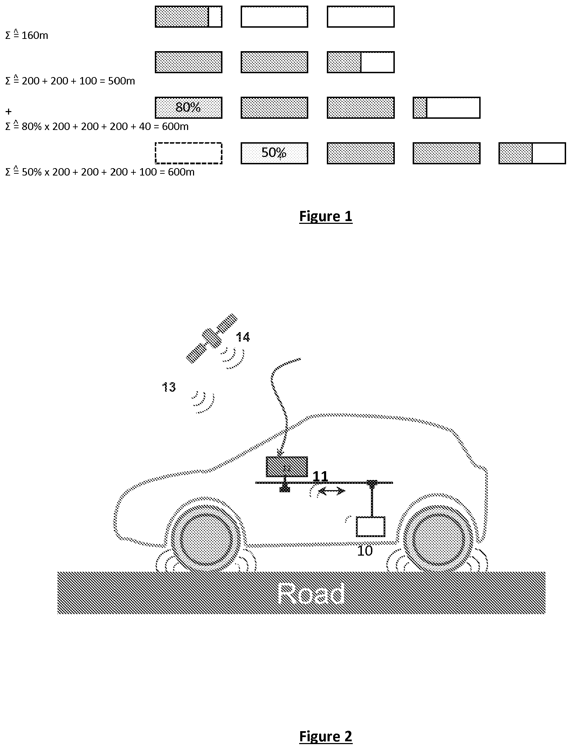

Cet exemple de réalisation est illustré à l'aide de la figure 1, sur laquelle on fait apparaître un découpage schématique d'un trajet en plusieurs tronçons.

Pour pouvoir réaliser un calcul glissant, on choisit de découper la distance d'identification en n tronçons, avec n petit, par exemple 3 tronçons de 200m.

Sur un premier tronçon, on calcul des écarts quadratiques à chaque cycle du calculateur mettant en œuvre un procédé selon l'invention, et on accumule la somme des écarts quadratiques sur ce premier tronçon. Cette somme est alors ajoutée aux écarts quadratiques calculés le tronçon suivant et ainsi de suite jusqu'à avoir parcouru la distance d'identification programmée.

Dans une n + unième somme, on additionne les écarts quadratiques au-delà de la distance programmée. La distance parcourue « dans » cette nouvelle somme est utilisée pour pondérer la somme la plus ancienne.

Ainsi, dans l'exemple de réalisation montré sur la figure 1, la séquence d'identification est considérée comme terminé si une distance de 600 mètres a été parcourue. Chaque rectangle de cette figure correspond à un tronçon de 200 mètres, ce tronçon ayant été déterminé arbitrairement, sans lien avec le trajet réel. Les pourcentages indiqués et les remplissages des rectangles permettent de faire apparaître le poids de chacun des tronçons dans le calcul final de l'indicateur quadratique.

La première ligne correspond à une distance parcourue de 160 mètres. Dans ce cas, on calcule les écarts quadratiques sur cette distance, A l'issue de ces 160 mètres, la séquence d'identification se poursuit. Toutefois, si elle est interrompue, l'accumulation des écarts quadratiques calculés sur les premiers mètres permet de fournir une information permettant de déterminer une classe de référence.

Sur la deuxième ligne, la distance parcourue est de 500 mètres. Dans ce cas, on accumule la somme des écarts quadratiques sur le premier tronçon, correspondant à 200 mètres, que l'on ajoute aux écarts quadratiques calculés sur le deuxième tronçon, correspondant à 200 mètres supplémentaires, et on ajoute cette somme aux écarts quadratiques du troisième tronçon de 100 mètres.

La troisième ligne illustre une distance de parcours de 640 mètres, c'est-à-dire une distance supérieure au critère de 600 mètres utilisé pour déterminer une fin d'identification. Dans ce cas, le premier tronçon est pondéré pour ne contribuer qu'à 80% dans le calcul de l'écart quadratique. Les deuxièmes et troisièmes tronçons contribuent à 100% et le quatrième tronçon ne contribue qu'à 20%, puisque seuls 40 mètres sont parcourus.

Sur la quatrième ligne enfin, 900 mètres ont été parcourus. Dans ce cas, le premier tronçon n'est pas pris en compte dans le calcul de l'écart quadratique, et les tronçons suivants contribuent respectivement à 50%, 100%, 100% et 50% dans le calcul final.

On constate, dans un tel mode de réalisation, que l'évolution de la somme totale des écarts quadratiques est continue, et le procédé permet effectivement de faire retomber à zéro exactement le poids des données obsolètes depuis plus d'un tronçon complet. D'autre part, le procédé devient insensible au nombre d'échantillons, et au final, les calculs restent peu nombreux et tous à fait réalisables dans un temps très raisonnable.

L'utilisation d'un tel découpage en tronçons a un impact quasi nul sur la séquence d'identification. En effet, lorsque les critères de fin d'identification sont atteints, par rapport à une séquence unique d'identification, les calculs ne sont simplement pas figés. Le reste est strictement identique, en particulier, le redémarrage de l'identification permet à tout moment de relancer la séquence depuis le début, avec réinitialisation des données.

**Mise en œuvre d'un procédé selon l'invention dans un véhicule :**

Dans un exemple de réalisation, illustré sur la figure 2, un procédé selon l'invention est concrètement mis en œuvre de la manière suivante :

- On télécharge initialement les profils de vitesse sur un trajet programmé dans une mémoire embarquée d'un calculateur 10 sur un véhicule,

- On met en œuvre un procédé de détermination de la classe de conduite de référence selon l'invention. Pour cela, le calculateur 10 détermine une vitesse du véhicule, soit par l'intermédiaire de données GPS 14, soit en lisant des données sur le bus Can 11 du véhicule

- Eventuellement, à l'issue de la mise en œuvre du procédé, on affiche dans le véhicule, par exemple sur une interface graphique du tableau de bord, la classe de référence déterminée et éventuellement des alertes déclenchées en cours de roulage selon l'un des procédés de l'invention

Dans un autre mode de réalisation, les profils de vitesse ne sont pas stockés sur une mémoire du véhicule, mais sur une base de données distante. Dans ce cas, le véhicule récupère les informations de cette base de données lorsqu'un individu s'installe au volant via des moyens de télécommunications installés sur le véhicule et recevant des données GSM 13. Dans un autre exemple encore, les données concernant les classes de conduite prédéterminées sont stockées dans une mémoire du véhicule, mais elles sont mises à jour régulièrement via la liaison GSM 13.

**Revendications**

1. Procédé de détermination d'une classe de conduite de référence d'un conducteur parmi un ensemble de classes de conduite prédéterminées, chaque classe de conduite prédéterminée étant **caractérisée par** un profil de vitesse, le procédé comprenant les étapes suivantes :

   - On détermine la vitesse d'un conducteur sur un trajet donné,
   - On compare la vitesse observée aux profils de vitesse de chacune des classes de conduite prédéterminées pour obtenir un écart entre le conducteur et chacune des classes de conduite,
   - On détermine une classe de conduite détectée comme étant celle qui minimise cet écart, et
   - On détermine la classe de conduite de référence en fonction de cette classe de conduite détectée.

2. Procédé de détermination selon la revendication 1, dans lequel la classe de référence est automatiquement déterminée comme étant égale à la classe détectée.

3. Procédé de détermination selon la revendication 1, comprenant les étapes suivantes :

   - une étape de transmission au conducteur du véhicule de la classe détectée,
   - une étape de réception d'une information de validation de la part du conducteur.

4. Procédé de détermination selon la revendication 1, dans lequel l'étape de comparaison comprend une étape de calcul d'un écart quadratique entre la vitesse observée et les points formant le profil de vitesse.

5. Procédé de détermination selon la revendication 1 ou 2, dans lequel l'étape de comparaison est effectuée au fur et à mesure de l'étape de détermination de vitesse.

6. Procédé de détermination selon l'une des revendications précédentes, dans lequel l'étape de comparaison s'achève lorsque un premier seuil de distance est franchi, et lorsque au moins un des critères suivants est rempli : la distance parcourue est supérieure à un second seuil de distance prédéterminé, l'écart entre le conducteur et chacune des classes de conduite est inférieur à un seuil d'écart prédéterminé, le trajet parcouru comprend un événement de trajet significatif.

7. Procédé de détermination selon l'une des revendications précédentes, dans lequel la vitesse du conducteur est déterminé par l'un des moyens suivants : la lecture de données sur le bus CAN du véhicule, l'utilisation de la vitesse GPS, l'utilisation d'un dispositif de type compteur de tours de roue.

8. Procédé de détermination selon l'une des revendications précédentes, comprenant une étape initiale de choix d'une classe de conduite initiale.

9. Procédé de détermination de profils de vitesse pour un procédé de détermination de vitesse selon l'une des revendications précédentes, dans lequel le procédé comprenant les étapes suivantes :

    - on fait l'acquisition de données représentatives de la vitesse de conduite d'un groupe de conducteurs sur une zone de conduite prédéfinie, chaque conducteur étant considéré comme un individu, et
    - on effectue une classification hiérarchique des individus pour les répartir en un nombre de classes défini en fonction des données,
    - on détermine une vitesse de profil pour chaque classe ainsi déterminée.

10. Procédé de détermination de profils de vitesse selon la revendication 9, dans lequel la classification hiérarchique est effectuée en utilisant uniquement une partie des données, les données étant choisies parmi les observations effectuées sur des zones de conduite pertinentes prédéterminées.

11. Procédé de surveillance et d'alerte de conduite pour un conducteur au volant d'un véhicule,

    - On identifie une classe de conduite de référence selon un procédé selon l'une des revendications précédentes, selon le procédé précèdent,
    - On détermine la vitesse du véhicule en un point, et on détermine l'écart entre cette vitesse et le profil de vitesse associé à la classe de conduite de référence,
    - Si l'écart est supérieur à un seuil prédéterminé, on émet une alerte à destination du conducteur du véhicule.

**Patentansprüche**

1. Verfahren zur Bestimmung einer Referenzfahrklasse eines Fahrers unter einer Menge von vorbestimmten Fahrklassen, wobei jede vorbestimmte Fahrklasse durch ein Geschwindigkeitsprofil gekennzeichnet ist, wobei das Verfahren die folgenden Schritte umfasst:

    - Bestimmen der Geschwindigkeit eines Fahrers über eine gegebene Strecke,
    - Vergleichen der beobachteten Geschwindigkeit mit den Geschwindigkeitsprofilen jeder der vorbestimmten Fahrklassen, um eine Abweichung zwischen dem Fahrer und jeder der Fahrklassen zu erhalten,
    - Bestimmen einer Fahrklasse, die als diejenige erkannt wird, die diese Abweichung minimiert, und
    - Bestimmen der Referenzfahrklasse in Abhängigkeit von dieser erkannten Fahrklasse.

2. Bestimmungsverfahren nach Anspruch 1, bei dem automatisch bestimmt wird, dass die Referenzklasse gleich der erkannten Klasse ist.

3. Bestimmungsverfahren nach Anspruch 1, umfassend die folgenden Schritte:

    - einen Schritt des Übertragens der erkannten Klasse an den Fahrer des Fahrzeugs,
    - einen Schritt des Empfangens einer Bestätigungsinformation vom Fahrer.

4. Bestimmungsverfahren nach Anspruch 1, bei dem der Vergleichsschritt einen Schritt des Berechnens einer quadratischen Abweichung zwischen der beobachteten Geschwindigkeit und den das Geschwindigkeitsprofil bildenden Punkten umfasst.

5. Bestimmungsverfahren nach Anspruch 1 oder 2, bei dem der Vergleichsschritt im Zuge des Geschwindigkeitsbestimmungsschritts ausgeführt wird.

6. Bestimmungsverfahren nach einem der vorhergehenden Ansprüche, bei dem der Vergleichsschritt endet, wenn ein erster Distanzschwellenwert überschritten wird und wenn mindestens eines der folgenden Kriterien erfüllt ist: die zurückgelegte Distanz ist größer als ein vorbestimmter Distanzschwellenwert, die Abweichung zwischen dem Fahrer und jeder der Fahrklassen ist kleiner als ein vorbestimmter Abweichungsschwellenwert, die zurückgelegte Strecke umfasst ein bedeutsames Streckenereignis.

7. Bestimmungsverfahren nach einem der vorhergehenden Ansprüche, bei dem die Geschwindigkeit des Fahrers durch eines der folgenden Mittel bestimmt wird: das Lesen von Daten über den CAN-Bus des Fahrzeugs, das Verwenden der GPS-Geschwindigkeit, das Verwenden einer Vorrichtung vom Radumdrehungszähler-Typ.

8. Bestimmungsverfahren nach einem der vorhergehenden Ansprüche, umfassend einen anfänglichen Schritt des Auswählens einer anfänglichen Fahrklasse.

9. Verfahren zur Bestimmung von Geschwindigkeitsprofilen für ein Geschwindigkeitsbestimmungsverfahren nach einem der vorhergehenden Ansprüche, bei dem das Verfahren die folgenden Schritte umfasst:

   - Erfassen von Daten, die für die Fahrgeschwindigkeit einer Gruppe von Fahrern über einen vorgegebenen Fahrbereich repräsentativ sind, wobei jeder Fahrer als eine Einzelperson betrachtet wird, und
   - hierarchisches Klassifizieren der Einzelpersonen, um sie in Abhängigkeit von den Daten auf eine definierte Anzahl von Klassen zu verteilen,
   - Bestimmen eines Geschwindigkeitsprofils für jede so bestimmte Klasse.

10. Verfahren zur Bestimmung von Geschwindigkeitsprofilen nach Anspruch 9, bei dem das hierarchische Klassifizieren erfolgt, indem nur ein Teil der Daten verwendet wird, wobei die Daten unter den Beobachtungen gewählt werden, die über vorbestimmte relevante Fahrbereiche gemacht werden.

11. Verfahren zur Fahrüberwachung und -warnung für einen Fahrer am Lenkrad eines Fahrzeugs,

   - Identifizieren einer Referenzfahrklasse nach einem Verfahren nach einem der vorhergehenden Ansprüche, nach dem vorhergehenden Verfahren,
   - Bestimmen der Geschwindigkeit des Fahrzeugs in einem Punkt und Bestimmen der Abweichung zwischen dieser Geschwindigkeit und dem der Referenzfahrklasse zugehörigen Geschwindigkeitsprofil,
   - wenn die Abweichung über einem vorbestimmten Schwellenwert liegt, Ausgeben einer Warnung an den Fahrer des Fahrzeugs.

**Claims**

1. Method for determining a reference driving class of a driver from among a set of predetermined driving classes, each predetermined driving class being **characterized by** a speed profile, the method comprising the following steps:

   - The speed of a driver over a given journey is determined,
   - The observed speed is compared with the speed profiles of each of the predetermined driving classes so as to obtain a deviation between the driver and each of the driving classes,
   - A detected driving class is determined as being that which minimizes this deviation, and
   - The reference driving class is determined as a function of this detected driving class.

2. Determining method according to Claim 1, in which the reference class is automatically determined as being equal to the detected class.

3. Determining method according to Claim 1, comprising the following steps:

   - a step of transmitting the detected class to the driver of the vehicle,
   - a step of receiving a validation information item from the driver.

4. Determining method according to Claim 1, in which the comparison step comprises a step of computing a square deviation between the observed speed and the points forming the speed profile.

5. Determining method according to Claim 1 or 2, in which the comparison step is performed in tandem with the speed determining step.

6. Determining method according to one of the preceding claims, in which the comparison step is completed when a first distance threshold is crossed, and when at least one of the following criteria is fulfilled: the distance travelled is greater than a second predetermined distance threshold, the deviation between the driver and each of the driving classes is less than a predetermined deviation threshold, the journey travelled comprises a significant journey event.

7. Determining method according to one of the preceding claims, in which the speed of the driver is determined by one of the following means: the reading of data on the CAN bus of the vehicle, the use of the GPS speed, the use of a device of the counter of wheel revolutions type.

8. Determining method according to one of the preceding claims, comprising an initial step of choosing an initial driving class.

9. Method for determining speed profiles for a speed determining method according to one of the preceding claims, in which the method comprising the following steps:

- the acquisition is effected of data representative of the driving speed of a group of drivers on a predefined driving zone, each driver being considered to be an individual, and
- a hierarchical classification of the individuals is performed so as to distribute them into a defined number of classes as a function of the data,
- a profile speed is determined for each class thus determined.

**10.** Method for determining speed profiles according to Claim 9, in which the hierarchical classification is performed by using solely a part of the data, the data being chosen from among the observations performed on predetermined relevant driving zones.

**11.** Driving monitoring and alert method for a driver at the steering wheel of a vehicle,

- A reference driving class is identified according to a method according to one of the preceding claims, according to the preceding method,
- The speed of the vehicle is determined at a point, and the deviation between this speed and the speed profile associated with the reference driving class is determined,
- If the deviation is greater than a predetermined threshold, an alert is emitted destined for the driver of the vehicle.

$\Sigma \triangleq 160m$

$\Sigma \triangleq 200 + 200 + 100 = 500m$

+

$\Sigma \triangleq 80\% \times 200 + 200 + 200 + 40 = 600m$

80%

$\Sigma \triangleq 50\% \times 200 + 200 + 200 + 100 = 600m$

50%

**Figure 1**

14

13

11

10

Road

**Figure 2**

11

**EP 3 472 015 B1**

## RÉFÉRENCES CITÉES DANS LA DESCRIPTION

**Documents brevets cités dans la description**

- DE 19843395